# EUROPÄISCHE PATENTSCHRIFT

(11) **EP 0 955 150 B1**
(45) Veröffentlichungstag und Bekanntmachung des Hinweises auf die Patenterteilung: **09.04.2003**
(21) Anmeldenummer: 99101898.7
(22) Anmeldetag: 29.01.1999
(51) Int. Cl.: B29C 51/44, B29C 51/26, B65G 57/16

(54) **Stapelvorrichtung für eine Thermoformmaschine**
Stacking device for a thermoforming machine
Dispositif d'empilage pour une machine de thermoformage

(30) Priorität: 11.02.1998 DE 29802318 U
(43) Veröffentlichungstag der Anmeldung: 10.11.1999
(73) Patentinhaber: Gabler Maschinenbau GmbH, D-23568 Lübeck (DE)
(72) Erfinder: Hüttig, Jörg, 23569 Lübeck (DE); Wölk, Frank-Michael, 23628 Klempau (DE)
(74) Vertreter: Valentin, Ekkehard, Dipl.-Ing.

(56) Entgegenhaltungen:
- DE-A- 19 509 057
- GB-A- 1 212 189
- US-A- 3 884 366
- US-A- 4 565 513

## Beschreibung

Die Erfindung betrifft eine Stapelvorrichtung für eine eine Heizung, einen intermittierenden Folientransport, ein starres Oberwerkzeug und ein Unterwerkzeug, das gegebenenfalls heb- und senkbar sowie ausschwenkbar sein kann, umfassende Thermoformmaschine zum Formen und Stanzen von tiefgezogenen, beliebigen becher- und deckelartigen Artikeln aus thermoplastischem Kunststoff oder dergleichen.

Eine solche Thermoformmaschine ist durch die DE-C2 33 46 628 bekanntgeworden. Auf diesen Maschinen werden zwischen den relativ aufeinanderzu bzw. voneinanderwegbewegten Werkzeugen Kunststoffartikel wie Margarineschalen, Trinkbecher, Behälterdeckel, Trays usw. aus thermoplastischen Kunststoff-Folien und Verbundfolien hergestellt. Hierbei werden in der geschlossenen Stellung von Ober- und Unterwerkzeug die Artikel geformt, dann gestanzt und in geöffneter Stellung aus dem Werkzeug heraus in eine Stapeleinrichtung transportiert. Das Oberteil bzw. -werkzeug dieser bekannten Thermoformmaschine ist an einer starren Querbrücke montiert, während das Unterteil bzw. -werkzeug auf einem höhenbeweglichen und schwenkbaren Formtisch befestigt ist. Zur Schwenkbarkeit des Formtisches besitzt dieser Lagerzapfen, deren Lager in je einem vertikal geführten Führungsstück angeordnet sind. Zum Antrieb sind Kniehebel eingesetzt, die mit Kurvenrollen den auf einer Hauptwelle befestigten Kurvenscheiben anliegen.

Damit die Artikel beim Abstapeln nicht gegen Störkanten geraten, wie beispielsweise im Bereich des Folientransportes, ist ein großer Schwenkwinkel von etwa 45 bis 90°, typischerweise von 80°, erforderlich. Die ausgeschobenen Artikel müssen in einer bewegten, dem Unterwerkzeug entgegenfahrenden Stapelplatte aufgenommen werden, da ansonsten die Gefahr besteht, daß die Artikel schwerkraftbedingt auf dem Wege in die Stapelplatte zu weit nach unten fallen und die Stapelplattendurchbrüche nicht mehr treffen. Wenig hilfreich ist hier eine alternativ mögliche, von vorne herein tiefer gestellte Stapelplatte, da die Artikel auf dem Weg zur Stapelplatte ihren Flugwinkel ändern können. Schließlich besitzt ein alternatives Ansaugen der Artikel an den Auswerfer den Nachteil, daß der Auswerfer komplizierter und - auch bedingt durch die dann benötigte Vakuumanlage - aufwendiger wird.

Auch die US-A-4 565 513 zeigt eine Stapelvorrichtung nach dem Oberbegriff von Anspruch 1.

Der Erfindung liegt die Aufgabe zugrunde, eine Stapelvorrichtung einer Thermoformmaschine der eingangs genannten Art zu schaffen, die sich variabel für unterschiedlich herzustellende Artikel aller Geometrien wie Becher, Trays, Deckel, Schalen oder dergleichen verwenden läßt und mit einfachen Mitteln dennoch eine hohe Produktionssicherheit bietet.

Diese Aufgabe wird erfindungsgemäß dadurch gelöst, daß eine zu einer die gefertigten, aus der Thermoformmaschine ausgestoßenen Artikel aufnehmenden unteren Stapelplatte komplementäre, heb- und senkbare obere Stapelplatte in einem verfahrbaren Schwenkarm angeordnet ist, der mit von einem drehbar im Schwenkarm gelagerten Schieber getragenen Führungsrollen auf einer an einem Ende um eine Horizontalachse eines Stapelvorrichtungsgestells in eine Deckelstapelbetriebs- und eine Becherstapelbetriebsstellung verstellbaren hebelartigen Kulissenstange läuft und zwangsgeführt von der Kulissenstange in eine bei abzustapelnden Deckeln vertikale und bei abzustapelnden Bechern horizontale Lage gelangt Es läßt sich mit der erfindungsgemäßen, auch an bereits bestehenden Thermoformmaschinen nachrüstbaren, in bevorzugter Weise mit der in der älteren deutschen Offenlegungsschrift DE-A-197 16 655 beschriebenen Thermoformmaschine zu kombinierenden Stapelvorrichtung, wobei diese in der Kombination mit einer in Schräglage angeordneten Thermoformmaschine die ausgestoßenen Artikel in einer Neigungslage aufnehmen würde, eine universelle Betriebsweise beim Abstapeln der Artikel erreichen. Denn diese haben je nach ihrer geometrischen Ausprägung ihre stabilste Lage entweder horizontal (Becher, Trays) oder vertikal (Deckel, Schalen), und eine Anpassung hieran erfordert entsprechend dem Fertigungsprogramm lediglich eine einfache manuelle Verstellung der Kulissenstange in entweder eine zugehörige obere oder eine untere Arretierpositon, die sich vorzugsweise mit einem an der Kulissenstange angeordneten Rastriegel sichern läßt. Im Falle einer von vornherein vertikal arbeitenden Thermoformmaschine würden die gefertigten Artikel in einem Foliengitter aus der Formstation heraustransportiert und einen oder mehrere Transportschritte hinter der Formstation von der Stapelvorrichtung vertikal übernommen und von dieser im gewünschten Winkel an die Ablage abgegeben werden.

Während des Verfahrens des Schwenkarmes wird dieser zwangsgeführt in eine entweder horizontale oder - wenn die Artikel aus einer Neigungslage übemommen werden - vertikale Abstapellage verschwenkt, so daß entsprechend die von der Stapelplatte des Schwenkarmes aufgenommenen Artikelstangen, deren Zahl von der Anzahl der in dem Unterwerkzeug vorhandenen Formnester abhängt, in die horizontale Lage (Becher) bzw. vertikale Lage (Deckel) gebracht werden. Denn durch die in ihrer oberen Betriebsstellung festgelegte Kulissenstange ergibt sich beim Verfahren des Schwenkarms aus einer geneigten Position zwangsläufig eine vertikale und bei festgelegter unterer Betiebsstellung zwangsläufig eine horizontale Endstellung des Schwenkarmes. Dies wird auch dadurch gewährleistet, daß der sich mit seinen Führungsrollen auf der Kulissenstange abrollende Schieber sich vorgegeben von der jeweiligen Neigungslage der Kulissenstange relativ gegenüber dem Schwenkarm verstellen kann. Da beim gleichzeitigen Schwenken und Verfahren des Schwenkarmes starke Lastwechsel auftreten, empfehlen sich motorische Antriebe.

Ein Ausgestaltung der Erfindung sieht vor, daß dem Schwenkarm ein Pusher zugeordnet ist, der die Artikelstangen auf ein der Stapelvorrichtung in Transportrichtung nachgeschaltetes Ablageblech oder Förderband abschiebt. Die an dem Schwenkarm motorisch verfahrbare bzw. heb- und senkbare obere Stapelplatte bringt hierbei den Vorteil mit sich, daß sich im Becherbetrieb der Hub des Pushers und damit die Baulänge der Stapelvorrichtung kleinhalten läßt; denn im Becherbetrieb mit in die Horizontallage verstelltem Schwenkarm kann die Stapelplatte mit den Artikelstangen auf den Pusher zu verfahren werden. Im Deckelbetrieb, bei dem die Artikelstangen zunächst auf ein sogenanntes Fingerblech abgesetzt werden, erlaubt es die motorische Verfahrbarkeit, die Stapelplatte weiter nach unten zu verfahren, so daß die Stapelplatte beim Abschieben der Artikelstangen auf ein Ablageblech dem Pusher nicht im Wege ist.

Eine vorteilhafte Ausführung der Erfindung sieht vor, daß in der oberen und der unteren Stapelplatte als selbsttätige Artikelrückhalteelemente aus einem elastischen Material ausgebildete, radial auffedernde Ausheber angeordnet sind. Die Ausheber, von denen jedem Stapelplattendurchbruch umfangsverteilt mehrere zugeordnet sind, ragen mit ihren sich nach oben hin allmählich erweiternden Enden zwar in den Querschnitt der Durchbrüche hinein, jedoch werden sie aufgrund ihrer Elastizität von beispielsweise dem oberen Rand eines in den Stapelplattendurchbruch eingestoßenen Bechers allmählich zusammengedrückt, bis der kragenartige Becherrand über den Aushebem liegt. Danach können sich diese wieder radial ausweiten und den Becherrand untergreifen. Die gleiche sichere Stapelhalterung bzw. der Artikelrückhalteeffekt wird erreicht, wenn - wie im Falle von sehr weichen und nachgiebigen Deckeln - sich der Artikel selbst nachgiebig verformt und nach dem Überwinden der Ausheber entspannen kann, womit er dann ebenfalls von den Aushebem untergriffen wird, die sich vorteilhaft als in Einstapelrichtung trichterartig erweiternde Rohrhülsen ausbilden lassen.

Wenn vorzugsweise die Rohrhülse mit von dem erweiterten oberen Ende her bis zu einem zylindrischen Hülsenbund reichenden, nach außen ausgestellte Ausheberlamellen definierenden Längsschlitzen versehen ist, läßt sich eine das nach der Durchmesserverengung radiale Auffedem begünstigende Segmentbauweise des Aushebers erreichen, und zwar über die ausgestellten Lamellen. Der in seinem Durchmesser unveränderte zylindrische Hülsenbund sowie vorteilhaft zwischen den ausgestellten Lamellenstegen verbleibende vertikale Mantelabschnitte bzw. -stege der Rohrhülse unterstützen dann deren Anbringung an eine Stapelstange.

Nach einer bevorzugten Ausführung der Erfindung läßt sich die Stapelvorichtung an eine die Stückzahl der zu stapelnden Artikel nach eingespeicherten Vorgabewerten zählende und den Stapelvorgang auslösende übergeordnete speicherprogrammierbare Steuerung der Thermoformmaschine anschließen. Dies erlaubt eine sehr einfache Anpassung an gewünscht unterschiedliche Losgrößen der Artikelstangen, da sich diese durch die integrierte Zählvorrichtung genau festlegen lassen, und eine problemlose Zuschaltung von Zusatzaggregaten, wie Beuteleinpacker oder Bördelmaschinen.

Weitere Merkmale und Vorteile der Erfindung ergeben sich aus den Ansprüchen und der nachfolgenden Beschreibung, in der Ausführungsbeispiele des Gegenstandes der Erfindung im Zusammenhang mit einer hier in Schrägstellung angeordneten Thermoformmaschine näher erläutert sind. Es zeigen:
- Fig. 1: in der Seitenansicht eine Thermoformmaschine mit nachgeschalteter Stapelvorrichtung zum Abstapeln von Becherstangen, wobei die obere Stapelplatte in einem geschnitten gezeigten, in der Ausgangsposition bei getrennten Stapelplatten schräg ausgerichteten Schwenkarm angeordnet ist, schematisch dargestellt;
- Fig.2: den in die Abstapelposition verfahrenen und in eine horizontale Lage verschwenkten Schwenkarm, vor dem Abschieben der Artikelstangen schematisch dargestellt;
- Fig. 3: die Vorrichtung gemäß Fig. 2 nach dem Abschieben der sich aus Bechern zusammensetzenden Artikelstangen auf ein Ablageblech;
- Fig.4: in der Seitenansicht eine Thermoformmaschine mit nachgeschalteter Stapelvorrichtung entsprechend der Betriebsposition gemäß Fig. 1 für hier demgegenüber allerdings abzustapelnde, sich aus Deckeln zusammensetzende Artikelstangen, schematisch dargestellt;
- Fig. 5: den in die Abstapelposition verfahrenen und in eine vertikale Lage verschwenkten Schwenkarm der Stapelvorrichtung nach Fig. 4;
- Fig. 6: die an dem Schwenkarm in eine Position unterhalb der abgelegten Artikelstangen abgesenkte Stapelplatte, vor dem Abschieben der Artikelstangen dargestellt;
- Fig. 7: die sich der Fig. 6 anschließende Betriebsposition nach dem Abschieben der Deckelstangen;
- Fig. 8: als Einzelheit der Stapelvorrichtung nach den Fig. 1 bis 7 den sich in vertikaler Lage befindenden Schwenkarm von - bezogen auf die vorgenannten Figuren - rechts her gesehen und teilgeschnitten dargestellt;
- Fig. 9: in vereinfachter, sehr schematischer Weise die die Verschwenkbarkeit des Schwenkarms bewirkenden Bauteile und ihre Zuordnung zueinander;
- Fig. 10: als Einzelheit ein Querschnitt durch eine Kavität der in der oberen und der unteren Stapelplatte vorhandenen Stapeldurchbrüche mit sich in Einstapelrichtung radial weitenden Aushebern; und
- Fig. 11: einen Ausheber gemäß Fig. 10 in der Gesamtansicht, als Draufsicht und als Längsschnitt dargestellt.

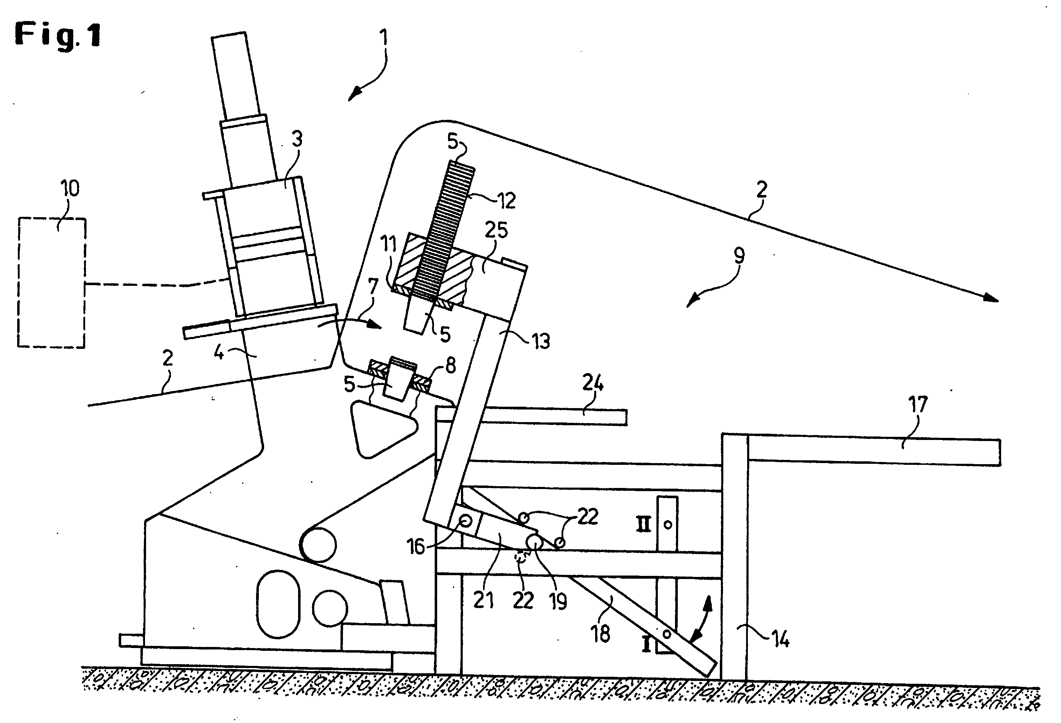

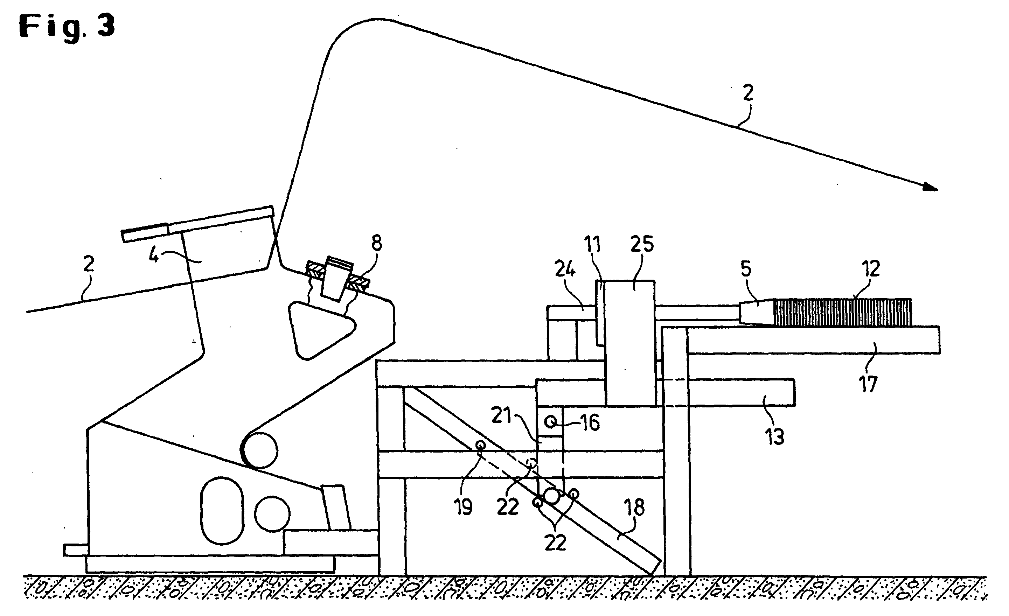

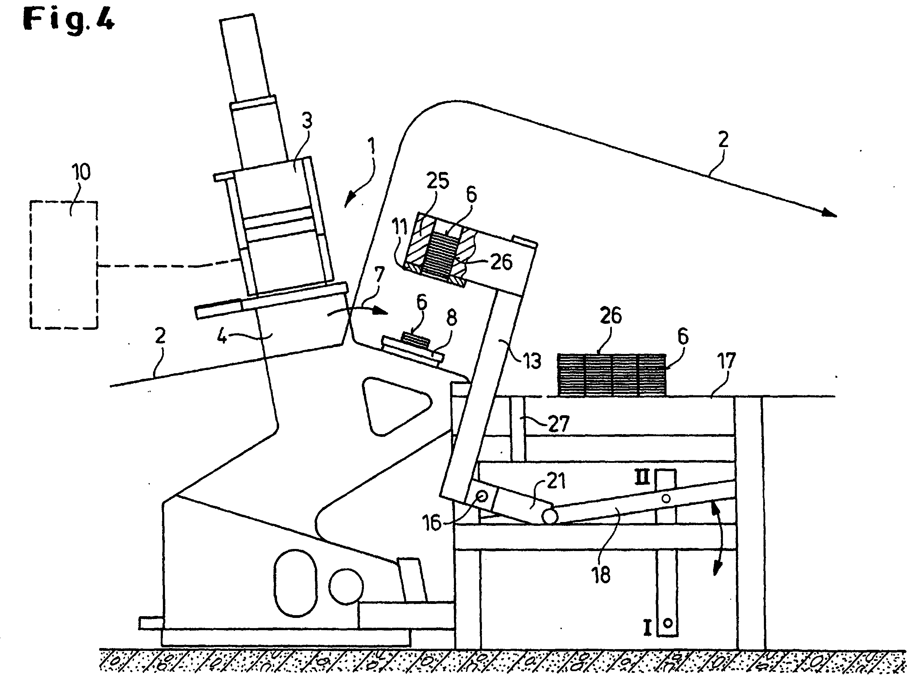

Einer Thermoformmaschine 1 wird gemäß den Fig. 1 bis 7 von einer Seite her ein Kunststoff-Folienband 2 einlaufseitig zugeführt und auslaufseitig gemäß Pfeil auf einer nicht dargestellten Wickelrolle wieder aufgewickelt. Auf seinem Weg zu der ein feststehendes Oberwerkzeug 3 und ein im Ausführungsbeispiel herausschwenkbares Unterwerkzeug 4 aufweisenden Maschineneinheit durchläuft das Folienband 2 eine Heizstation der Thermoformmaschine 1. Sobald ein der Anzahl der in dem Unterwerkzeug 4 vorgesehenen Formnester entsprechender Abschnitt des Folienbandes 2 zwischen Ober- und Unterwerkzeug 3, 4 eingelaufen ist, werden bei geschlossenen Werkzeugen die Artikel - bei der Ausführung nach den Fig. 1 bis 3 sind dies Becher 5 und bei der Ausführung nach den Fig. 4 bis 7 Deckel 6 - ausgeformt und -gestanzt.

Sobald die Artikel fertiggestellt sind, wird das Unterwerkzeug 4 in Pfeilrichtung 7 in eine Abstapelstellung verschwenkt und die Artikel (Becher 5 bzw. Deckel 6) auf eine untere Stapelplatte 8 einer der Thermoformmaschine 1 nachgeschalteten Stapel- und Artikelzählvorrichtung 9 abgelegt. Die Schrägstellung der Thermoformmaschine 1 mit einer Neigung von etwa 10° zum Boden erlaubt ein nahezu vertikales Abstapeln der fertigen Artikel aus dem Unterwerkzeug 4 in die untere Stapelplatte 8 hinein. Die Thermoformmaschine 1 ist an eine übergeordnete, lediglich schematisch als Black-Box gestrichelt dargestellte speicherprogrammierbare Steuerung 10 angeschlossen, und sobald die über die Steuerung 10 angewählte Artikel-Stückzahl in der unteren Stapelplatte 8 erreicht ist, wird eine komplementäre obere Stapelplatte 11 abgesenkt und übernimmt die entsprechenden Artikelstangen 12 aus ineinandergeschobenen Bechem 5; durch Abheben der oberen Stapelplatte 11 kommen die Artikelstangen 12 frei von der unteren Stapelplatte 8, wie in Fig. 1 gezeigt.

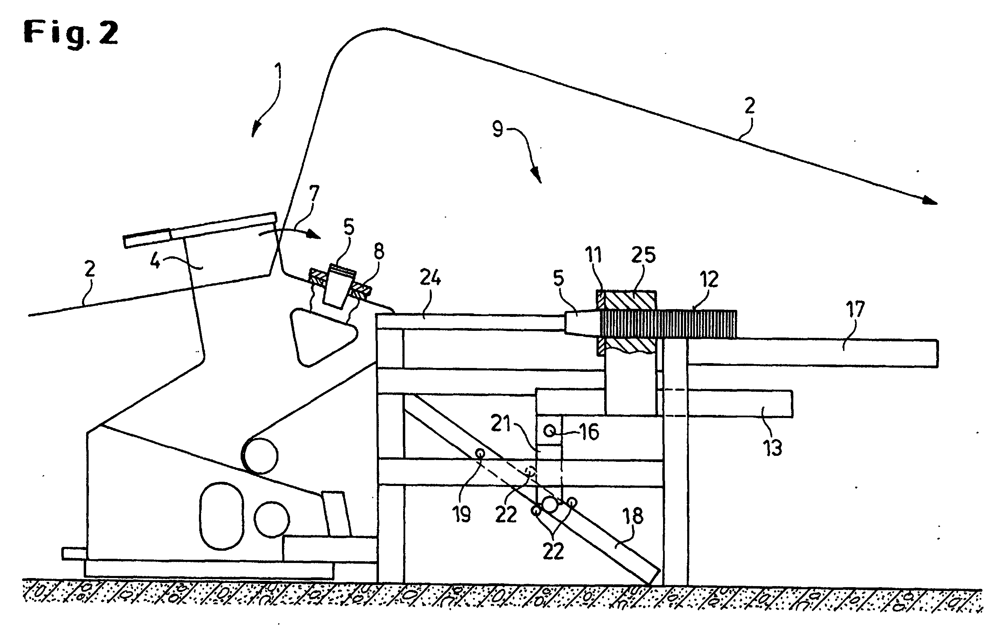

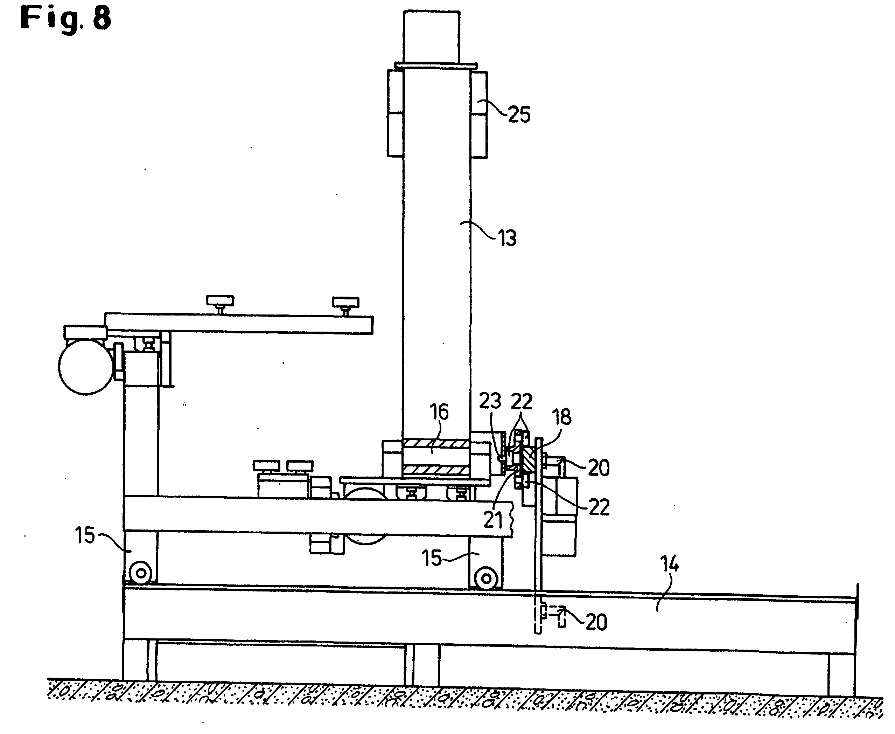

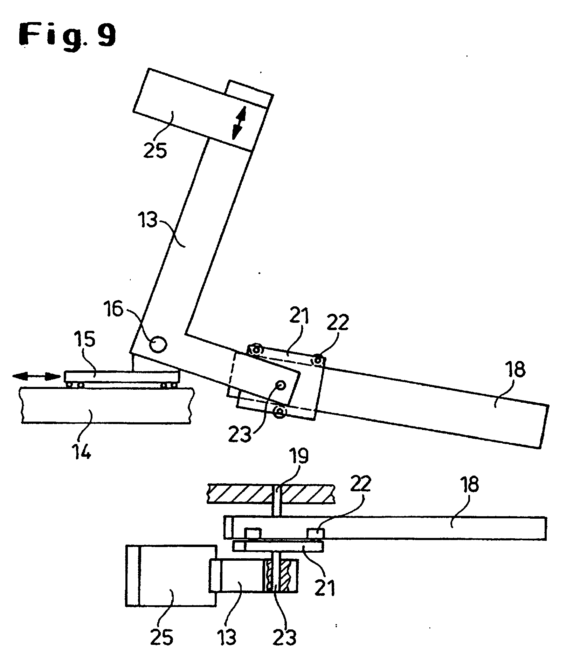

Die obere Stapelplatte 11 ist heb- und senkbar an einem Schwenkarm 13 angeordnet, der in einem auf einem Grundgestell 14 verfahrbaren Stapelvorrichtungsgestell 15 um eine horizontale Drehachse 16 (vgl. Fig. 8, insbesondere. Fig. 9) verschwenkbar gelagert ist. Zum Ablegen der von der oberen Stapelplatte 11 übernommenen Artikelstangen 12 auf ein Ablageblech 17 wird der Schwenkarm 13 aus seiner in Fig. 1 gezeigten Übernahmeposition in die in Fig. 2 gezeigte Abschiebeposition verfahren und dabei gleichzeitig um seine Drehachse bzw. seinen Drehpunkt 16 in eine horizontale Lage verschwenkt. Dies wird durch eine Zwangsführung des Schwenkarmes 13 auf einer Kulissenstange 18 erreicht, die bei der Abstapelung von sich aus Bechern 5 zusammensetzenden Artikelstangen 12 um eine Horizontalachse 19 in eine in Verfahrrichtung des Schwenkarmes 13 geneigte Lage verstellt und dort mittels eines Rastriegels 20 in einer Becherstapelbetriebsstellung I verriegelt worden ist (vgl. auch den in Fig. 8 in der unteren Position gestrichelt gezeichneten Rastriegel 20).

Der Schwenkarm 13 wird auf der Kulissenstange 18 mit von einem Schieber 21 getragenen Führungsrollen 22 geführt; der Schieber 21 ist mittels eines Zapfens 23 drehbeweglich in dem Schwenkarm 13 gelagert (vgl. Fig. 9). Der Schieber 21 kann sich daher während des Verfahrens des Schwenkarmes 13 in einer zu diesem festgelegten kinematischen Beziehung relativ verschwenken bis er die in der Endstellung gemäß Fig. 2 dargestellte Lage einnimmt. In dieser Lage kommt ein verfahrbarer Pusher 24 zum Einsatz, der die Artikelstangen 12 durch die Kavitäten bzw. Durchbrüche der oberen Stapelplatte 11 hindurch auf das nachgschaltete Ablageblech 17 abschiebt. Damit der Hub des Pushers 24 klein gehalten wird, ist die über ein freitragendes Querhaupt 25 verfahrbar an dem Schwenkarm 13 angeordnete obere Stapelplatte 11 aus ihrer in Fig. 1 an dem Schwenkarm 13 oberen Position in eine den Pusher 24 angenäherte Position verfahren worden. Beim Zurückfahren des Schwenkarmes 13 nach dem Abstapeln der Artikelstangen 12 in die in Fig. 1 gezeigte Betriebsposition sind die Bewegungsabläufe entsprechend umgekehrt.

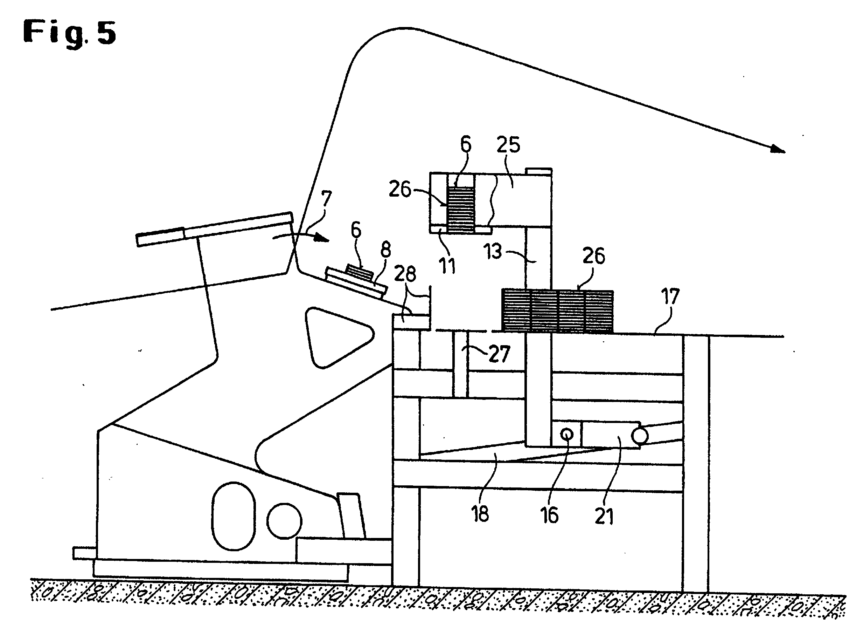

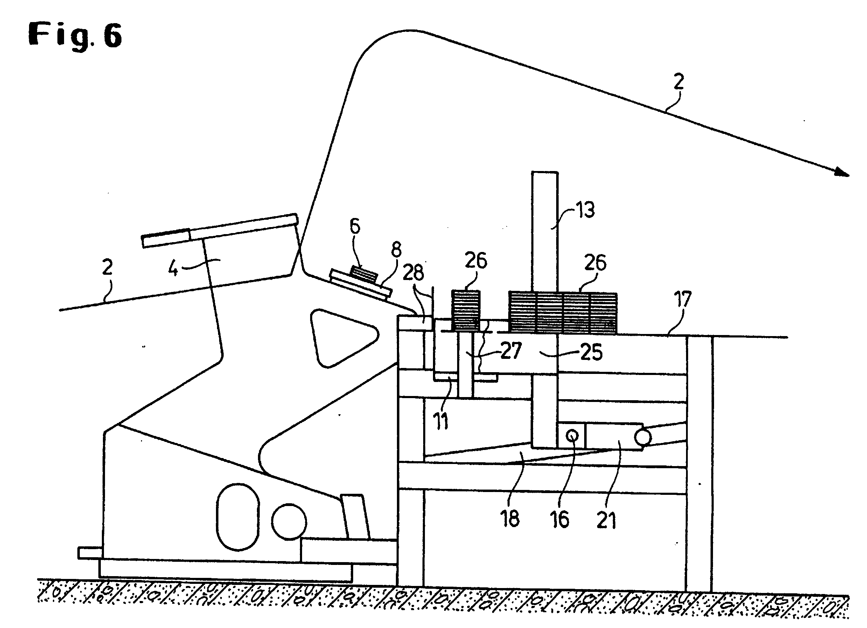

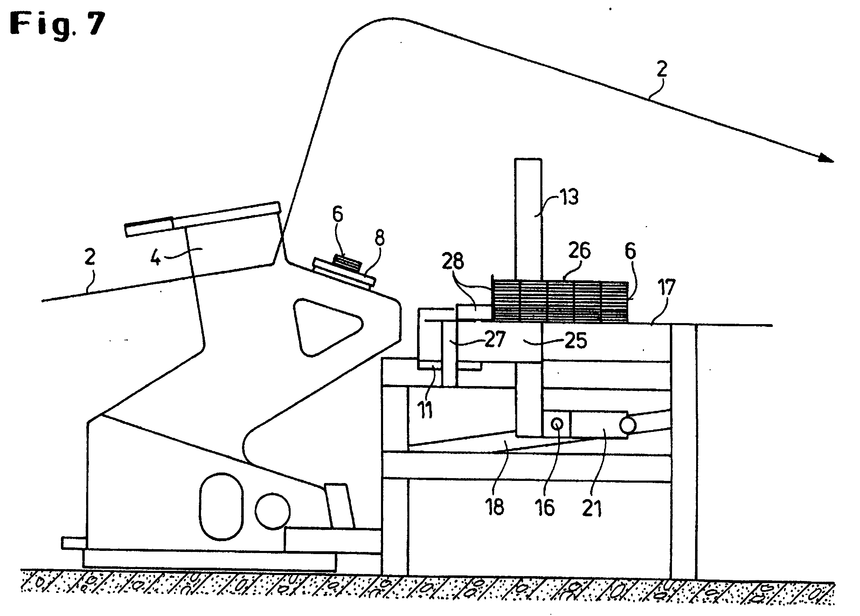

Die in den Fig. 4 bis 7 gezeigte Abstapelung von zu Artikelstangen 26 zusammengefaßten Deckeln 6 geschieht mit denselben Bauteilen und Abläufen wie zuvor beschrieben, so daß in ihrem Aufbau und ihrer Wirkung übereinstimmende Bauteile mit denselben Bezugsziffern versehen sind. Abweichend von der Becher-Stapelung ist die Kulissenstange 18 hier allerdings um ihre Horizontalachse 19 in ihre der Deckelstapelbetriebsstellung II zugehörige obere Arretierposition verschwenkt worden, in der sie in Verfahrrichtung des Schwenkarms 13 nach oben ansteigend verläuft. In diesem Fall wird der Schwenkarm 13 während des Verfahrens aus der Übernahmeposition gemäß Fig. 4, in der er eine Schräglage einnimmt, in die in den Fig 5 bis 7 dargestellte Abstapelposition aufgrund der Zwangsführung auf der Kulissenstange 18 in eine vertikale Lage verschwenkt. Sobald der Schwenkarm 13 die Position gemäß Fig. 5 erreicht hat, wird das Querhaupt 25 mit der unteren Stapelplatte 11 abgesenkt, bis die übernommenen Artikelstangen 26 auf eine im Hubweg abgeordnete Zwischenablage in Form von Fingerblechen 27 abgelegt werden, wie in Fig. 6 gezeigt; das Querhaupt 25 mit der unteren Stapelplatte 11 wird danach gemäß Fig. 6 weiter nach unten abgesenkt, so daß ein Pusher 28 die auf die Ablagefläche der Fingerbleche 27 zwischengelagerten Artikelstangen 26 an die auf dem Ablageblech 17 schon aus vorhergehenden Stapelvorgängen vorhandenen Artikelstangen 26 andrücken können, wie in Fig. 7 gezeigt. Zur erneuten Bereitschaft wird der' Schwenkarm 13 danach mit umgekehrtem Bewegungsablauf in die Ausgangsposition gemäß Fig. 4 zurückbewegt.

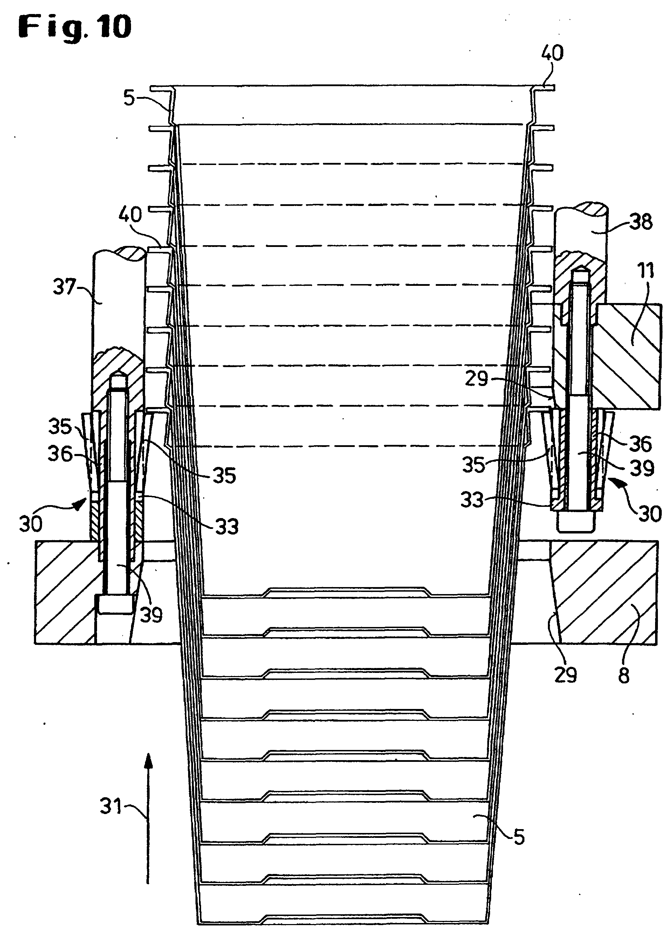

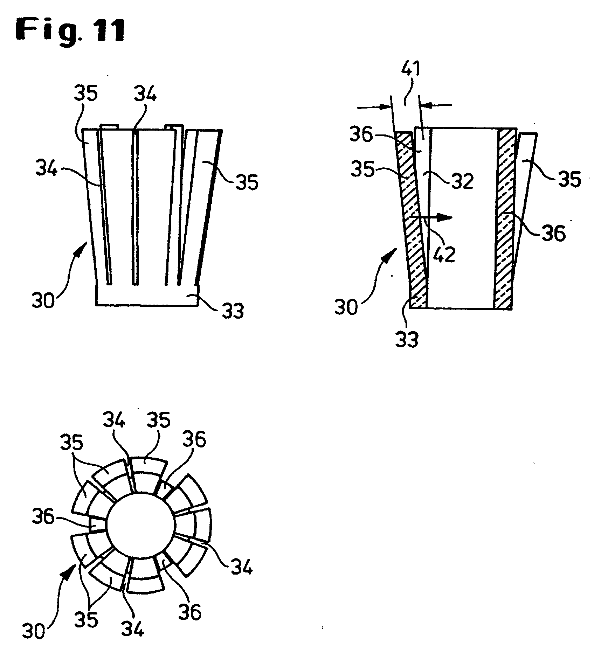

Sowohl die obere als auch die untere Stapelplatte 8 bzw. 11 ist mit den Stape(plattendurchbrüchen bzw. Kavitäten 29 (vgl. Fig. 10) zugeordneten Aushebern 30 versehen, wie in der linken Hälfte der Fig. 10 für die untere Stapelplatte 8 und in der rechten Hälfte der Fig. 10 für die obere Stapelplatte 11 zur Übernahme von Bechem 5 gezeigt. Die Ausheber 30 sind als selbsttätige Artikelrückhalteelemente ausgebildet; sie bestehen aus einem elastischen, federnden Material und erweitern sich gemäß Fig. 11 in Einstapelrichtung 31 (vgl. Fig. 10) trichterartig. Dies wird im Ausführungsbeispiel dadurch erreicht, daß eine Rohrhülse 32 mit von ihrem erweiterten oberen Ende her bis zu einem zylindrischen Hülsenbund 33 reichenden Längsschlitzen 34 versehen ist, was es erlaubt, einerseits mehrere nach außen ausgestellte Ausheberlamellen 35 vorzusehen und andererseits über den Umfang verteilt einige wenige Rohrstege 36 - im Ausführungsbeispiel drei Stege (vgl. die Draufsicht in Fig. 11) - in unverändert vertikaler Ausrichtung, d.h. ohne sie nach außen auszustellen, zu belassen.

Die Ausheber 30 werden auf Stapelstangen 37 bzw. 38 der unteren bzw. oberen Stapelplatte 8 bzw. 11 auf in diese eingeschraubten Gewindebolzen 39 gesteckt, wobei diese von dem zylindrischen Hülsenbund 33 und den Rohrstegen 36 eng umschlossen werden, und durch Anziehen der Gewindebolzen 39 an den jeweiligen Stapelplatten 8, 11 festgelegt. Im Falle des Übernehmens und Abstapelns von in Fig. 10 gezeigten Bechern 5 gelangen deren Kragen 40 beim Einbringen in Einstoßrichtung 31 zur Anlage an die ihnen zugewandten Ausheberlamellen 35, die aufgrund ihrer Elastizität entsprechend dem in der Längsschnitt-Darstellung von Fig. 11 gezeigten Federweg 41 in Pfeilrichtung 42 ausweichen und den Weg für den gerade einzubringenden Becher 5 freimachen; sobald ein Becher die Länge der Ausheber 30 überwunden hat, stellen sich die Ausheberlamellen 35 selbsttätig wieder in die in Fig. 10 gezeigte Position zurück, in der sie den Kragen 40 des Bechers 5 sicher untergreifen und halten. Sobald eine von der speicherprogrammierbaren Steuerung angewählte Artikel-Stückzahl übernommen worden ist, wird die von dem Querhaupt 25 des Schwenkarms 13 getragene obere Stapelplatte 11 von der unteren Stapelplatte 8 abgehoben, wobei die Artikelstangen von den den Stapelplattendurchbrüchen 29 zugeordneten, in der rechten Hälfte der Fig. 10 gezeigten Aushebern 30 abgestützt und gehalten zu dem beschriebenen Abstapeln durch Verschwenken des Schwenkarmes 13 in die bei der Becher-Herstellung horizontale Lage (vgl. die Fig 1 bis 3) verfahren.

## Patentansprüche

1. Stapelvorrichtung (9) für eine eine Heizung, einen intermittierenden Folientransport, ein starres Oberwerkzeug (3) und ein Unterwerkzeug (4) umfassende Thermoformmaschine (1) zum Formen und Stanzen von tiefgezogenen, beliebigen becher- oder deckelartigen Artikeln (5, 6) aus thermoplastischem Kunststoff oder dergleichen,
**dadurch gekennzeichnet,**
**daß** eine zu einer die gefertigten, aus der Thermoformmaschine (1) ausgestoßenen Artikel (5, 6) aufnehmenden unteren Stapelplatte (8) komplementäre, heb- und senkbare obere Stapelplatte (11) in einem verfahrbaren Schwenkarm (13) angeordnet ist, der mit von einem drehbar im Schwenkarm (13) gelagerten Schieber (21) getragenen Führungsrollen (22) auf einer an einem Ende um eine Horizontalachse (19) eines Stapelvorrichtungsgestells (15) in eine Deckelstapelbetriebs- und eine Becherstapelbetriebsstellung (II; I) verstellbaren hebelartigen Kulissenstange (18) läuft und zwangsgeführt von der Kulissenstange (18) in eine bei abzustapelnden Deckeln (6) vertikale und bei abzustapelnden Bechern (5) horizontale Lage gelangt.

2. Stapelvorrichtung nach Anspruch 1,
**dadurch gekennzeichnet,**
**daß** die Kulissenstange (18) einen in eine untere und eine obere Arretierposition (I; II) einstellbaren Rastriegel (20) aufweist

3. Stapelvorrichtung nach Anspruch 1 oder 2,
**gekennzeichnet durch**
einen die Artikelstangen (12; 26) auf ein Ablageblech (17) abschiebenden Pusher (24; 28).

4. Stapelvorrichtung, insbesondere nach einem der Ansprüche 1 bis 3,
**gekennzeichnet durch**
in der unteren und der oberen Stapelplatte (8; 11) angeordnete, als selbsttätige Artikelrückhalteelemente aus einem elastischen Material ausgebildete, radial auffedemde Ausheber (30).

5. Stapelvorrichtung nach Anspruch 4,
**dadurch gekennzeichnet,**
**daß** die Ausheber (30) als sich in Einstapelrichtung (31) trichtrartig erweiteme Rohrhülsen (32) ausgebildet sind.

6. Stapelvorrichtung nach Anspruch 5,
**dadurch gekennzeichnet,**
**daß** die Rohrhülse (32) mit von dem erweiterten oberen Ende her bis zu einem zylindrischen Hülsenbund (33) reichenden, nach außen ausgestellte Ausheberlamellen (35) definierenden Längsschlitzen (34) versehen ist.

7. Stapelvorrichtung nach einem der Ansprüche 1 bis 6,
**dadurch gekennzeichnet,**
**daß** sie an eine die Stückzahl der zu stapelnden Artikel (5; 6) nach eingespeicherten Vorgabewerten zählenden und den Stapelvorgang auslösenden übergeordneten speicherprogrammierbaren Steuerung (10) der Thermoformmaschine (1) angeschlossen ist.

## Claims

1. A stacking device (9) for a thermoforming machine (1) consisting of a heating unit, a discontinuous foil transport mechanism, a rigid upper tool (3) and a lower tool (4) for forming and stamping out of thermoplastic synthetic material any deep-drawn articles (5, 6) having the nature of a cup or lid,
**characterised in that**
a vertically displaceable upper stacking plate (11) complementing a lower stacking plate (8), which receives the articles (5, 6) as they are ejected from thermoforming machine (1), is arranged on a movable swinging arm (13) that moves along a telescopic rod (18), which functions as a lever and is displaceable at one end about a horizontal axis (19) of a stacking device trestle (15), between a position for stacking lids and a position for stacking cups (I; II) aided by guide rollers (22) that are supported on sliding member (21) which is rotatably attached to swivelling arm (13), and is forced by telescopic rod (18) into a vertical position for stacking lids (6) and a horizontal position for stacking cups (5).

2. The stacking device according to claim 1,
**characterised in that**
telescopic rod (18) is furnished with a ratchet bar (20) which may be set to an upper and a lower blocking position (I; II).

3. The stacking device according to claim 1 or 2,
**characterised by**
a pusher (24; 28) that pushes article stacks (12; 26) across a deposit surface (17).

4. The stacking device according to any of claims 1 to 3,
**characterised by**
radially sprung ejector devices (30) made from an elastic material that are arranged in the lower and upper stacking plates (8; 11) as self-actuated article retaining elements.

5. The stacking device according to claim 4,
**characterised in that**
ejector devices (30) are conformed as cylindrical shells (32) that are flared outwards in direction of stacking (31).

6. The stacking device according to claim 5,
**characterised in that**
the cylindrical shell (32) is provided with longitudinal slits (34) that extend from the flared top end as far as a cylindrical shell base (33) and that define outwardly facing ejection tongues (35).

7. The stacking device according to any of claims 1 to 6,
**characterised in that**
it is connected to a governing stored program control unit (10) of the thermoforming machine (1) which counts the number of articles (5; 6) to be stacked according to stored command values and triggers the stacking operation.

## Revendications

1. Dispositif d'empilement (9) pour une machine de thermoformage (1) comportant un chauffage, un système intermittent de transport de film, un outil supérieur rigide (3) et un outil inférieur (4) pour le formage et le découpage de n'importe quels articles (5, 6) emboutis de type godets ou couvercles en matière thermoplastique ou similaire,
**caractérisé en ce que**
une plaque d'empilement (11) supérieure pouvant être élevée et abaissée complémentaire de la plaque inférieure (8) recevant les articles fabriqués éjectés (5, 6) de la machine de thermofonnage (1) est installée dans un bras oscillant (13) mobile qui se met en position pour empiler des couvercles et en position pour empiler des godets (II; I) sur une barre à coulisse (18) de type levier, réglable avec des rouleaux de guidage (22) supportés par un tiroir (21) installé de manière à pouvoir pivoter dans le bras oscillant (13), à une extrémité autour d'un axe horizontal (19) d'un bâti de dispositif d'empilement (15) et parvient sous guidage forcé de la barre à coulisse (18) dans une position verticale en cas de couvercles (6) à empiler et horizontale en cas de godets (5) à empiler.

2. Dispositif d'empilement selon la revendication 1,
**caractérisé en ce que**
la barre à coulisse (18) présente un verrou d'enclenchement (20) réglable dans une position de blocage inférieure et supérieure (I ; II).

3. Dispositif d'empilement selon la revendication 1 ou 2,
**caractérisé par**
un poussoir (24 ; 28) tirant les barres d'articles (12 ; 26) sur une tôle de dépôt (17).

4. Dispositif d'empilement selon une des revendications 1 à 3,
**caractérisé par**
des extracteurs (30) faisant ressort dans le sens radial configurés comme des éléments autonomes de soutien d'articles en matière élastique disposés dans la plaque d'empilement inférieure et la plaque supérieure (8 ; 11).

5. Dispositif d'empilement selon la revendication 4,
**caractérisé en ce que**
les extracteurs (30) sont configurés comme des manchons tubulaires (32) s'élargissant en entonnoirs dans le sens d'empilement (31).

6. Dispositif d'empilement selon la revendication 5,
**caractérisé en ce que**
le manchon tubulaire (32) est muni de fentes longitudinales (34) définissant des lamelles d'extraction (35) s'étalant vers l'extérieur allant de l'extrémité supérieure élargie jusqu'à un rebord cylindrique du manchon (33).

7. Dispositif d'empilement selon une des revendications 1 à 6,
**caractérisé en ce que**
il est raccordé à un mécanisme de commande superposé (10) à mémoire programmable de la machine de thermoformage (1), comptant les articles à empiler (5 ; 6) en fonction de valeurs normalisées en mémoire et déclenchant l'opération d'empilement.
